# EUROPEAN PATENT SPECIFICATION

(11) **EP 4 242 958 B1**
(45) Date of publication and mention of the grant of the patent: **24.06.2026**
(21) Application number: 21889152.1
(22) Date of filing: 01.11.2021
(51) Int. Cl.: G06Q 50/10, H02J 7/00, B60L 53/14, B60L 53/68, G16Y 10/40, G16Y 20/20, G16Y 40/30, B60L 53/16, B60L 53/65

(54) **CHARGE MANAGEMENT SYSTEM, CHARGE SYSTEM, CHARGE MANAGEMENT METHOD, AND PROGRAM**
LADEVERWALTUNGSSYSTEM, LADESYSTEM, LADEVERWALTUNGSVERFAHREN UND PROGRAMM
SYSTÈME, PROCÉDÉ ET PROGRAMME DE GESTION DE CHARGE ET SYSTÈME DE CHARGE

(30) Priority: 06.11.2020 JP 2020186085
(43) Date of publication of application: 13.09.2023
(73) Proprietor: Panasonic Intellectual Property Management Co., Ltd., Osaka-shi, Osaka 540-6207 (JP)
(72) Inventor: YAMAMOTO, Yuto, Osaka-shi, Osaka 540-6207 (JP); OSHIMA, Akiyoshi, Osaka-shi, Osaka 540-6207 (JP)
(74) Representative: Appelt, Christian W.
(86) International application number: PCT/JP2021/040193
(87) International publication number: WO 2022/097599

(56) References cited:
- JP-A- 2003 223 501
- JP-A- 2006 158 087
- JP-A- 2010 165 157
- JP-A- 2019 139 444
- US-A1- 2014 207 498

## Description

### Technical Field

The present disclosure generally relates to a charging management system, a charging system, a charging management method, and a program. More particularly, the present disclosure relates to a charging management system, a charging system, a charging management method, and a program, all of which are configured or designed to manage charging an electric vehicle.

### Background Art

JP 2018-18250 A discloses an operating system for providing car sharing services that temporarily rent an electric car (which is an exemplary electric vehicle) at the user's demand. The operating system has the capability of accepting a reservation for an electric car from the user and the capability of assigning an electric car to the reservation.

An operating system as disclosed in JP 2018-18250 A needs to make management of charging an electric vehicle returned by the user. In that case, when the electric vehicle is returned by the user, a connection status needs to be managed by determining whether a charging connector of a charger is connected to a socket of the electric vehicle returned.

US 2014/207498 A1 discloses an electric vehicle return process based on whether a return condition associated with an electric charging of a returned electric vehicle is satisfied.

### Summary of Invention

It is therefore an object of the present disclosure to provide a charging management system, a charging system, a charging management method, and a program, all of which are configured or designed to manage a connection status by determining whether a charging connector of a charger is connected to a socket of an electric vehicle returned by the user.

A charging management system according to an aspect of the present disclosure includes an acquirer, a decider, and a notifier as defined in claim 1.

A charging system according to another aspect of the present disclosure includes the charging management system described above and the charger as defined in claim 5.

A charging management method according to still another aspect of the present disclosure includes the steps defined in claim 6

A program according to yet another aspect of the present disclosure is designed to cause one or more processors to perform the charging management method of claim 6.

### Brief Description of Drawings

FIG. 1 schematically illustrates a configuration for a management system according to an exemplary embodiment;
FIG. 2 is a sequence chart showing the procedure of operation of the management system;
FIG. 3 is a block diagram of a charging management system included in the management system;
FIG. 4 is a block diagram of a terminal device included in the management system;
FIG. 5 is a block diagram of a power supply system included in the management system;
FIG. 6 is a block diagram of a charger included in the management system;
FIG. 7 is a block diagram of a use management system included in the management system;
FIG. 8 illustrates an exemplary use schedule of the management system;
FIG. 9 illustrates an exemplary charging schedule of the management system; and
FIG. 10 is a sequence chart showing another procedure of operation of a charging management system.

### Description of Embodiments

### (1) Embodiment

### (1-1) Overview

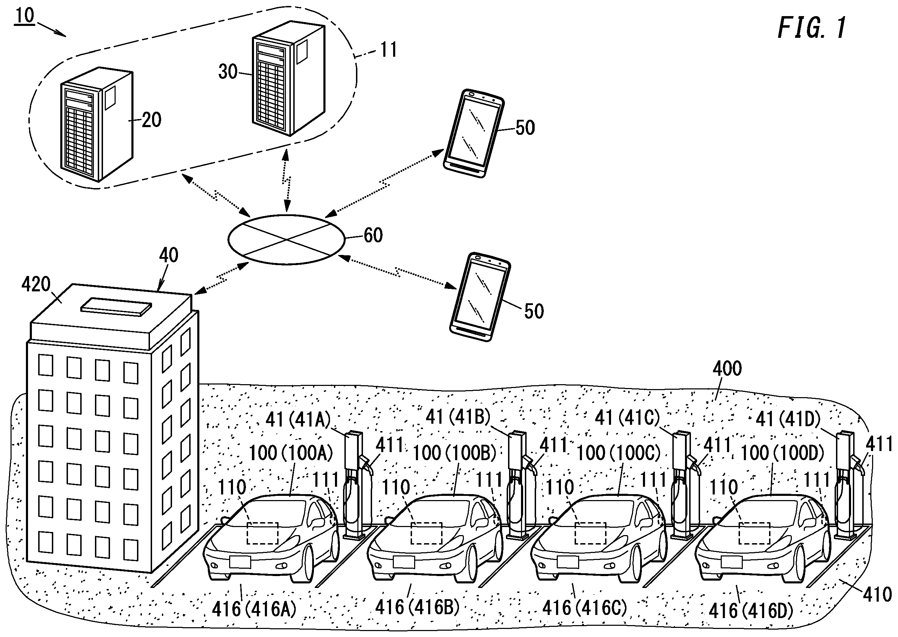

FIG. 1 illustrates a management system 10 according to an exemplary embodiment. The management system 10 is a system for managing the use of one or more moving vehicles 100 by one or more users. In particular, in the exemplary embodiment to be described below, the management system 10 is supposed to be a system for managing the use of a plurality of moving vehicles 100 (100A-100D) by a plurality of users. The management system 10 manages the plurality of moving vehicles 100 to allow each of the plurality of users to use a moving vehicle 100 that meets his or her demand (i.e., a moving vehicle 100 that he or she wants or wishes to use). As used herein, the "use" refers to both use that requires no payment of fees and use that requires payment of fees. For example, if the plurality of moving vehicles 100 are owned by a company and one of the moving vehicles 100 is used by a user who is an employee of the company, then no payment of fees is required. On the other hand, if the company allows a user who is not an employee of the company to use one of their own moving vehicles 100 (i.e., if the company rents the moving vehicle 100 to the user), then the user who is not employed by the company pays the fee for using the moving vehicle 100.

In this embodiment, each moving vehicle 100 includes a storage battery 110 and a socket 111 (refer to FIG. 1). The storage battery 110 is a chargeable and dischargeable secondary battery (such as a battery). The storage battery 110 is used as a power source for the moving vehicle 100. That is to say, the storage battery 110 is used to drive a drive source (such as a motor) of the moving vehicle 100. The socket 111 is a part to/from which a charging connector 411 of a charger 41 may be connected and disconnected. When the charging connector 411 of the charger 41 is connected to the socket 111, the socket 111 receives power from the charger 41 and charges the storage battery 110 with the power received. The moving vehicle 100 may be, for example, an electric vehicle designed to travel using the electric energy stored in the storage battery 110. Examples of the electric vehicles include an electric car designed to travel based on the output of a motor and a plug-in hybrid car designed to travel using the output of an engine and the output of a motor in combination. That is to say, the electric vehicle may herein refer to a car that uses electricity as part or all of its power source. The moving vehicle 100 does not have to be a four-wheeler but may also be a two-wheeler (e-bike), a three-wheeler, or an electric bicycle. In the following description, the moving vehicle 100 is supposed to be an electric car and will be hereinafter referred to as an "electric car 100" as needed to make the following description more easily understandable.

The management system 10 may be used in, for example, car-sharing services and rent-a-car services. In particular, according to this embodiment, the management system 10 may be used to provide a service of renting a vehicle owned by a corporation such as a company to a user. In that case, the user may be not only a person (such as an employee) belonging to the corporation but also a person not belonging to the corporation. That is to say, the management system 10 may be used to provide a service of renting a vehicle that no person belonging to the corporation (such as an employee) plans to use to a person not belonging to the corporation.

As shown in FIG. 1, the management system 10 includes a charging management system 20, a use management system 30, a power supply system 40, and terminal devices 50. The charging management system 20, the use management system 30, the power supply system 40, and the terminal devices 50 may be connected to a communications network 60. The power supply system 40 includes chargers 41. In this embodiment, the charging management system 20 and the chargers 41 form a charging system.

Each of the terminal devices 50 is a device that allows the user to transmit a demand for using the electric car 100 to a moving vehicle management system 11.

The use management system 30 is a system for managing the use of one or more electric cars 100 by one or more users. For example, in response to a demand from a user, the use management system 30 selects an electric car 100 that meets the user's demand from a plurality of electric cars 100 and assigns the electric car 100 to the user. Specifically, on the user's demand, the use management system 30 determines a use schedule for the plurality of electric cars 100 and assigns one of the electric cars 100 to the user by reference to the use schedule.

The charging management system 20 is a system for managing charging one or more electric cars 100 by the power supply system 40. For example, the charging management system 20 appropriately controls charging one or more electric cars 100, thereby reducing the chances of the remaining capacity of the storage battery 110 of the electric car(s) 100 running short when the electric car(s) 100 needs to be used. Specifically, the charging management system 20 determines a charging schedule for the plurality of electric cars 100 by reference to the use schedule given by the use management system 30 and controls the power supply system 40 following the charging schedule.

The power supply system 40 includes one or more chargers 41 (41A-41D) for use to charge the electric car(s) 100. Each charger 41 may charge an electric car 100 with electricity supplied from a power supply such as a commercial AC power supply or a distributed power supply (such as a solar battery, a storage battery, a fuel cell, or a wind power generator). In the power supply system 40, each charger 41 charges an electric car 100 in accordance with an instruction from the charging management system 20 with the charging connector 411 of the charger 41 connected to the socket 111 of the electric car 100, thereby having one or more electric cars 100 charged as per the charging schedule.

The charging management system 20 and the use management system 30 are connected to the communications network 60 to establish the moving vehicle management system 11. The moving vehicle management system 11 manages schedule information including the use schedule and the charging schedule of one or more electric cars 100 and assigns, in accordance with the schedule information and a demand from a user, an electric car 100 that meets the user's demand to him or her.

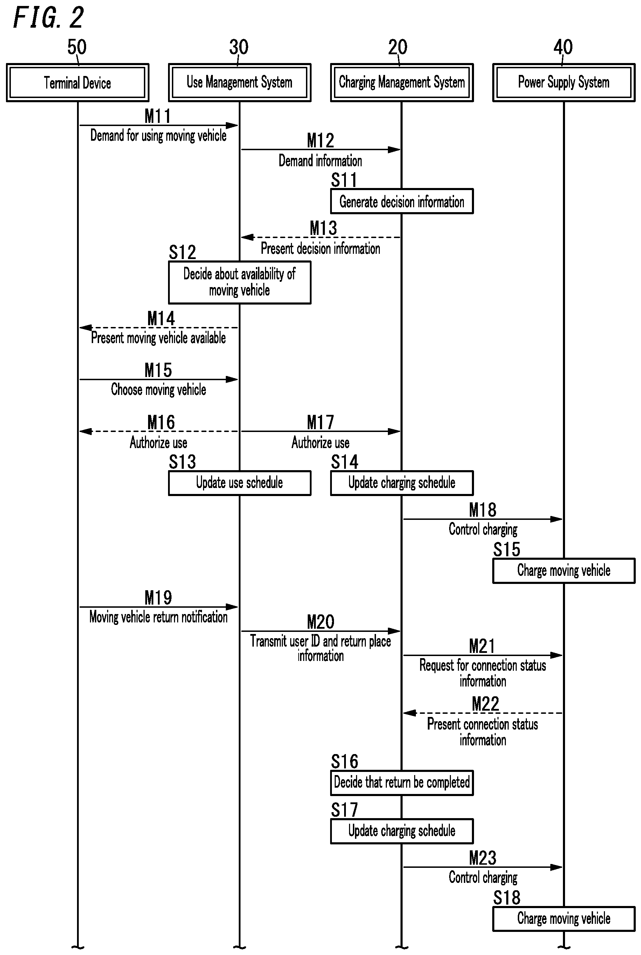

FIG. 2 illustrates an exemplary operation of the management system 10. The user operates his or her terminal device 50 to send a demand for using (hereinafter referred to as a "use demand") an electric car 100 (in M11). The use demand from the user is transmitted from the terminal device 50 to the use management system 30. In accordance with the use demand from the user, the use management system 30 provides the charging management system 20 with demand information (in M12). The demand information may include, for example, information about a demand period in which use of the electric car 100 is demanded. As used herein, the "demand period" refers to a period in which use of the electric car 100 is demanded by the user. The charging management system 20 generates decision information based on an amount of available electricity from the storage battery 110 in the demand period of the electric car 100 (in S11). The amount of available electricity is obtained based on the use schedule of the plurality of electric cars 100 and the demand information. The decision information is information for use to determine whether or not there is any electric car 100 available in the demand period, among the plurality of electric cars 100. The charging management system 20 presents the decision information to the use management system 30 (in M13). The use management system 30 makes, by reference to the use demand from the user and the decision information, a decision about the availability of the electric car 100 (i.e., determines whether or not there is any electric car 100 that meets the user's demand for using the electric car 100) (in S12). When finding one or more electric cars 100 available, the use management system 30 transmits information about the one or more electric cars 100 available to the terminal device 50, thereby presenting the one or more electric cars 100 available to the user (in M14). When the user chooses, on the terminal device 50, an electric car 100 that he or she wants to use from the one or more electric cars 100 available, information about the electric car 100 chosen by the user is sent to the use management system 30 (in M15). In response, the use management system 30 authorizes the use of the electric car 100 chosen by the user and notifies the terminal device 50 and the charging management system 20 that the use of the electric car 100 has been authorized (in M16 and M17). Then, the use management system 30 updates the use schedule of the plurality of electric cars 100 (in S13). Meanwhile, the charging management system 20 updates the charging schedule of the plurality of electric cars 100 (in S14). Thereafter, the charging management system 20 controls the power supply system 40 (in M18), thereby charging the electric car 100 connected to each charger 41 as per the charging schedule (in S15).

Also, when returning the electric car 100 that the user has used, the user operates his or her terminal device 50 to make a return notification informing that he or she has returned the electric car 100 used (in M19). The return notification includes a user ID and return place information. The user ID is identification information to identify the user. The return place information is information to identify (i.e., determine) a place where the user has returned the electric car 100. In this embodiment, when returning the electric car 100 used, the user chooses one return place from a plurality of prespecified return places and parks (i.e., returns) the electric car 100 to the return place thus chosen. Then, the user connects the charging connector 411 of a charger 41 installed in the return place to the socket 111 of the electric car 100 returned. Thereafter, the user transmits, as the return notification, return information including his or her own user ID and return place information about the return place chosen, to the use management system 30. Note that each of the plurality of prespecified return places is provided with predefined return place information. Thus, when transmitting the return notification, the user transmits the predefined return place information.

The return notification is transmitted from the user's terminal device 50 to the use management system 30. In response, the use management system 30 transfers the user ID and return place information, which are included in the return notification, to the charging management system 20 (in M20). Then, the charging management system 20 sends a request for the connection status information of the charger 41 installed in the return place, identified by the return place information, to the power supply system 40 (in M21). In response, the power supply system 40 transmits the connection status information of the charger 41 to the charging management system 20 (in M22). As used herein, the connection status information is information indicating whether the charging connector 411 of the charger 41 is connected to the socket 111 of the electric car 100. The charging management system 20 determines, based on the connection status information, whether the charging connector 411 of the charger 41 is connected to the socket 111 of the electric car 100. When finding the charging connector 411 connected to the socket 111, the charging management system 20 decides that the return of the electric car 100 from the user be completed (in S16). In that case, as soon as the return of the electric car 100 from the user is completed, the charging management system 20 updates the charging schedule for the plurality of electric cars 100 so that the charging schedule includes charging the electric car 100 returned (in S17). Then, the charging management system 20 controls the power supply system 40 (in M23), thereby charging the electric car 100 connected to each charger 41 following the charging schedule (in S18).

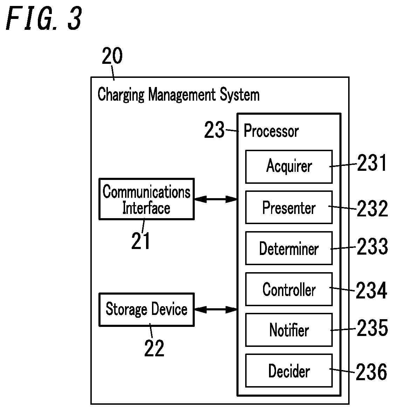

In this manner, the management system 10 according to this embodiment assigns an electric car 100 to the user. In addition, in the management system 10, the charging management system 20 includes a connection checking system for checking, when the electric car 100 is returned from the user, whether the charging connector 411 of a charger 41 is connected to the electric car 100 returned. This connection checking system (charging management system 20) is implemented as an acquirer 231 and a decider 236 (refer to FIG. 3). In other words, the connection checking system includes the acquirer 231 and the decider 236. The acquirer 231 acquires the connection status information indicating whether the charging connector 411 of the charger 41 is connected to the socket 111 of the electric car 100. The decider 236 determines, depending on whether the connection status information acquired by the acquirer 231 indicates that the charging connector 411 is connected to the socket 111, whether the return of the electric car 100 from the user is completed.

Such a connection checking system (charging management system 20) may make management by determining whether the charging connector 411 of a charger 41 is connected to the socket 111 of the electric car 100 returned from the user.

### (1-2) Details

Next, the management system 10 according to this embodiment will be described in further detail. As shown in FIG. 1, the management system 10 includes the charging management system 20, the use management system 30, the power supply system 40, and the terminal devices 50. The charging management system 20, the use management system 30, the power supply system 40, and the terminal devices 50 may be connected to the communications network 60. In particular, the charging management system 20 and the use management system 30 are connected to the communications network 60 to establish the moving vehicle management system 11. In addition, the power supply system 40 includes the chargers 41. The charging management system 20 and the chargers 41 form a charging system.

The communications network 60 may include the Internet. The communications network 60 does not have to be a network compliant with a single communications protocol but may also be a plurality of networks compliant with multiple different communications protocols, respectively. The communications protocol may be selected from various known wired and wireless communication standards. Although illustrated in a simplified form in FIG. 1, the communications network 60 may include various data communications devices such as a repeater hub, a switching hub, a bridge, a gateway, and a router.

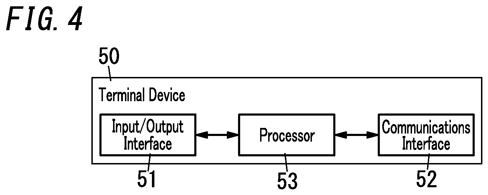

Each of the terminal devices 50 may be used to enter information into the moving vehicle management system 11 and display thereon information provided by the moving vehicle management system 11. As shown in FIG. 4, the terminal device 50 includes an input/output interface 51, a communications interface 52, and a processor 53. The terminal device 50 may be implemented as, for example, a desktop computer, a laptop computer, or a mobile communications device (such as a smartphone, a tablet computer, or a wearable device). In this embodiment, the terminal device 50 is implemented as a smartphone.

The input/output interface 51 includes an input device for use to operate the terminal device 50. The input device may include, for example, a keyboard, a mouse, a trackball, or a touchpad. In addition, the input/output interface 51 includes an image display device for displaying information thereon. The image display device may include a display device with a reduced thickness such as a liquid crystal display or an organic EL display.

The communications interface 52 is a communications interface. The communications interface 52 may be connected to the communications network 60 and has the capability of establishing communication over the communications network 60. The communications interface 52 is compliant with a predetermined communications protocol. The predetermined communications protocol may be selected from various known wired and wireless communication standards.

The processor 53 is configured to perform overall control on the terminal device 50, i.e., control the input/output interface 51 and the communications interface 52. The processor 53 has the capability of transmitting, in response to an operating command entered through the input/output interface 51, information entered by the user from the communications interface 52 to the moving vehicle management system 11 via the communications network 60. In addition, the processor 53 also has the capability of presenting, to the user via the input/output interface 51, information provided by the moving vehicle management system 11 and received at the communications interface 52 over the communications network 60.

The processor 53 may be implemented as a computer system including one or more processors (microprocessors) and one or more memories. That is to say, the functions of the processor 53 are performed by making the one or more processors execute one or more (computer) programs (applications) stored in the one or more memories. In this embodiment, the program is stored in advance in the memory of the processor 53. Alternatively, the program may also be downloaded via a telecommunications line such as the Internet or distributed after having been stored in a non-transitory storage medium such as a memory card.

The power supply system 40 is a system for charging the storage battery 110 for use as a power source for the electric car 100. As shown in FIG. 1 the power supply system 40 is installed in a facility 400. The facility 400 may include a parking lot 410 for the electric cars 100 and a building 420 annexed to the parking lot 410. Examples of the facility 400 include dwelling houses (such as single-family dwelling houses and multi-family dwelling houses) and non-dwelling facilities (such as factories, commercial facilities, amusement facilities, hospitals, offices, and office buildings).

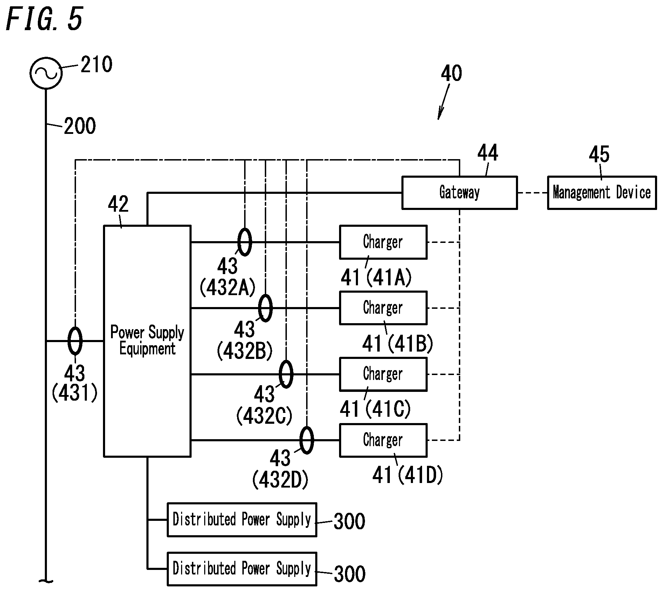

As shown in FIG. 5, the power supply system 40 includes a plurality of chargers 41 (41A-41D) for use to charge the electric cars 100, power supply equipment 42, a plurality of current sensors 43, a gateway 44, and a management device 45.

The parking lot 410 includes a plurality of separate parking spaces 416 (416A-416D) (refer to FIG. 1). Each of the plurality of separate parking spaces 416 is a space wide enough to park a single electric car 100. The separate parking space 416 is also a charging place where the electric car 100 is charged. The separate parking space 416 is also a return place where the electric car 100 rented to the user is returned. Around each separate parking space 416, a single charger 41 associated with the separate parking space 416 is installed. That is to say, the plurality of chargers 41 (41A-41D) are provided one to one for the plurality of separate parking spaces 416 (416A-416D). The electric car 100 parked in each separate parking space 416 is charged with the charger 41 provided for the separate parking space 416.

The chargers 41 are connected to the power supply equipment 42. Each charger 41 may charge the storage battery 110 of an electric car 100 connected to the charger 41 with the power supplied from the power supply equipment 42. The charger 41 may be connected to an electric car 100 parked in its corresponding separate parking space 416. The charger 41 may use various types of charging stations, which are roughly classifiable into two types, namely, standard charging stations and rapid charging stations. In this embodiment, a standard charging station for charging the storage battery 110 by receiving single-phase AC power of 200 V (or 100V) is used for the chargers 41. The modes of standard charging may be classifiable into "Mode 1," "Mode 2," and "Mode 3" according to the charging control scheme (see IEC 61851-1 standard). Specifically, according to "Mode 1," power is supplied to an electric car from a charging station having no control circuits. According to "Mode 2," a control circuit is built in a charging cable. According to "Mode 3," a control circuit is built in the charging station. In this embodiment, the chargers 41 are supposed to adopt the "Mode 3" scheme.

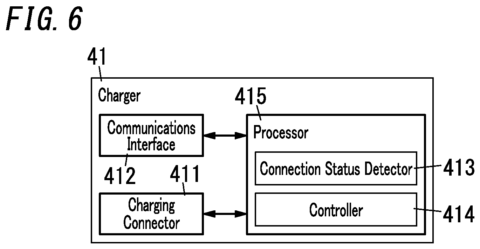

The charger 41 includes the charging connector 411, a communications interface 412, and a processor 415 as shown in FIG. 6.

The charging connector 411 is a part to be connected removably to the socket 111 of an electric car 100 and is connected to the housing of the charger 41 via a cable. The charging connector 411 supplies the power, delivered from the power supply equipment 42 to the charger 41, to the electric car 100 connected to the charging connector 411. The charging connector 411 includes a plurality of connection terminals. The plurality of connection terminals of the charging connector 411 are connected to a plurality of connection terminals provided for the socket 111 of the electric car 100. The plurality of connection terminals of the charging connector 411 corresponds one to one to the plurality of connection terminals of the socket 111. Each of the plurality of connection terminals of the charging connector 411 includes a power supply terminal and a signal terminal. The power supply terminal is a terminal for outputting power therethrough and is connected to a corresponding one (power supply terminal) of the plurality of connection terminals of the socket 111. The signal terminal is a terminal through which a connection status signal (such as a control pilot (CPLT) signal) is transmitted and received between the charger 41 and the electric car 100 and is connected to a corresponding one (signal terminal) of the plurality of connection terminals of the socket 111. As used herein, the "connection status signal" refers to a signal representing a connection status (e.g., either connected or unconnected) between the charging connector 411 and the socket 111 of the electric car 100.

The communications interface 412 is connected to the gateway 44 and establishes communication with the management device 45 and the charging management system 20 via the gateway 44.

The processor 415 is a control circuit for controlling the operation of the charger 41. The processor 415 may be implemented as a computer system including one or more processors (microprocessors) and one or more memories. That is to say, the functions of the processor 415 are performed by making the one or more processors execute one or more (computer) programs (applications) stored in the one or more memories. In this embodiment, the program is stored in advance in the memory of the processor 415. Alternatively, the program may also be downloaded via a telecommunications line such as the Internet or distributed after having been stored in a non-transitory storage medium such as a memory card.

The processor 415 includes a connection status detector 413 and a controller 414.

The connection status detector 413 determines whether the charging connector 411 is connected to the socket 111 of the electric car 100 and acquires the result of detection as connection status information. More specifically, the connection status detector 413 transmits and receives, between the charger circuit of the electric car 100 and itself via the signal terminal of the charging connector 411, a signal for use to check the connection status between the charging connector 411 and the socket 111 of the electric car 100 (i.e., a connection status signal (CPLT signal)). In this embodiment, the connection status detector 413 has a control pilot (CPLT) function and transmits and receives, using the CPLT function, the connection status signal (CPLT signal) between the charger circuit for the electric car 100 and itself. As used herein, the "CPLT function" refers to the function of checking, by transmitting and receiving the CPLT signal, whether the charging connector 411 of the charger 41 and the socket 111 of the electric car 100 are connected to each other without fail and starting charging the electric car 100 if the answer is YES.

The connection status detector 413 determines, based on the voltage level of the connection status signal supplied from the signal terminal of the charging connector 411, whether the charging connector 411 is connected to the socket 111. While the charging connector 411 has not been connected to the socket 111 yet, the voltage level of the connection status signal is a first voltage level (of 12 V, for example). On the other hand, in a state where the charging connector 411 is connected to the socket 111, the voltage level of the connection status signal is a second voltage level (of 6 V or 9 V, for example) which is lower than the first voltage level. When finding the voltage level of the connection status signal to be the first voltage level, the connection status detector 413 detects that the charging connector 411 has not been connected to the socket 111 yet. On the other hand, when finding the voltage level of the connection status signal to be the second voltage level, the connection status detector 413 detects that the charging connector 411 is connected to the socket 111.

In accordance with an instruction given by the management device 45, the controller 414 outputs the result of detection (connection status information) by the connection status detector 413 to the management device 45 and controls starting and stopping supplying power from the charging connector 411.

The power supply equipment 42 is connected to a power grid 200 and may receive power from a commercial AC power supply 210. In addition, the power supply equipment 42 is also connected to distributed power supply 300 and may supply power to, or receive power from, the distributed power supply 300. The distributed power supply 300 may be either an AC power supply or a DC power supply. Examples of the AC power supplies include AC power generation systems such as a wind power generation system. Examples of the DC power supplies include solar batteries, fuel cells, and secondary batteries (storage batteries). Examples of the secondary batteries includes nickel-hydrogen batteries and lithium-ion batteries. The power supply equipment 42 may distribute the power supplied from either the commercial AC power supply 210 or the distributed power supply 300 to the respective chargers 41. Note that the power supply equipment 42 may have a configuration already known in the art, and a detailed description thereof will be omitted herein.

The plurality of current sensors 43 include a first current sensor 431, and a plurality of second current sensors 432A-432D. The first current sensor 431 is installed on an electrical path between the power grid 200 and the power supply equipment 42 and may measure a current supplied from the power grid 200 to the power supply equipment 42. The second current sensors 432A-432D are installed on the electrical paths between the power supply equipment 42 and the chargers 41A-41D and may measure the current supplied from the power supply equipment 42 to the chargers 41A-41D. Note that the current sensors 43 may each have a configuration already known in the art, and a. detailed description thereof will be omitted herein.

The management device 45 may control the plurality of chargers 41. Specifically, as shown in FIG. 5, the management device 45 is connected to the gateway 44 and communicates with the plurality of chargers 41 and the plurality of current sensors 43 via the gateway 44. This allows the management device 45 to control the respective chargers 41 and acquire operating status information representing the operating status of the power supply system 40 and the connection status information representing the connection status between the charging connectors 411 of the chargers 41 and the sockets 111 of the electric cars 100. In this embodiment, the operating status of the power supply system 40 is represented by results of current measurements made by the plurality of current sensors 43 (including the first current sensor 431 and the plurality of second current sensors 432A-432D). The management device 45 is connected to the communications network 60 via the gateway 44 and is ready to communicate with the charging management system 20 via the gateway 44 and the communications network 60. In accordance with an instruction given by the charging management system 20, the management device 45 may acquire the connection status information of the charging connector 411 from each charger 41 and transmit the connection status information thus acquired to the charging management system 20. In addition, in accordance with an instruction given by the charging management system 20, the management device 45 controls the respective chargers 41. This enables the electric cars 100 to be charged as per the charging schedule.

The use management system 30 is a system for managing the use of one or more electric cars 100 by one or more users. In this embodiment, the use management system 30 determines a use schedule for the plurality of electric vehicles 100 and manages the use of the electric cars 100 by reference to the use schedule.

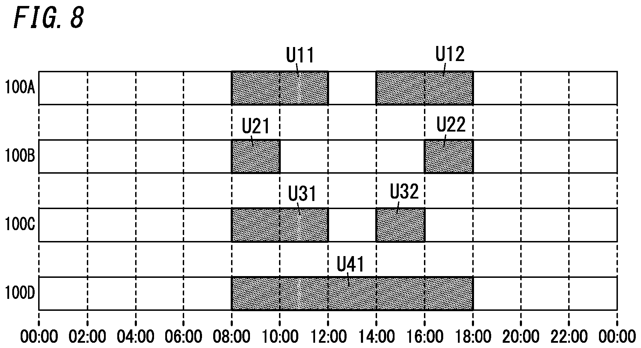

FIG. 8 shows an exemplary use schedule. In FIG. 8, the use schedule indicates the scheduled use periods of a plurality of (e.g., four in this example) electric cars 100A-100D during a specified period. In FIG. 8, the specified period is one day. However, this is only an example and should not be construed as limiting. The specified period does not have to be one day but may also be, for example, one week, one month, or one year and may be set as appropriate according to the operating status of the management system 10. The scheduled use period means a period for which the electric car 100 is scheduled to be used by the user. The scheduled use period is a period for which the user is allowed an exclusive use of the electric car 100. In other words, the scheduled use period is a period for which the user has the right to use the electric car 100 exclusively. Thus, during the scheduled use period, the user is allowed to use the electric car 100 freely as far as the predefined contract is fulfilled. For example, during the scheduled use period, the user may go anywhere by the electric car 100 or have a meal or go shopping by parking the electric car 100 in a parking lot.

In FIG. 8, as for the electric car 100A, a scheduled use period U11 is set as a period from 08:00 to 12:00 and another scheduled use period U12 is set as a period from 14:00 to 18:00. As for the electric car 100B, a scheduled use period U21 is set as a period from 08:00 to 10:00 and another scheduled use period U22 is set as a period from 16:00 to 18:00. As for the electric car 100C, a scheduled use period U31 is set as a period from 08:00 to 12:00 and another scheduled use period U32 is set as a period from 14:00 to 16:00. As for the electric car 100D, a scheduled use period U41 is set as a period from 08:00 to 18:00.

In addition, the use management system 30 holds information about the electric energy consumption expected with respect to each of the scheduled use periods included in the use schedule. The electric energy consumption expected corresponds to a decrease in the remaining capacity of the storage battery 110 due to the use of the electric car 100 in the scheduled use period. Note that the electric energy consumption expected does not have to be an electric energy required to allow the electric car 100 to travel at a predetermined speed during the scheduled use period but may be set with various conditions, including the attribute information of the electric car 100, taken into account. The attribute information of the electric car 100 may include at least one of the type, the intended use, the initial location, the destination, the distance to travel, the number of passengers to travel, or the mode of use. For example, if the intended use indicated by the attribute information of the electric car 100 is shopping, the electric energy consumption expected may be set at 50% of the electric energy required to allow the electric car 100 to travel at the predetermined speed during the scheduled use period.

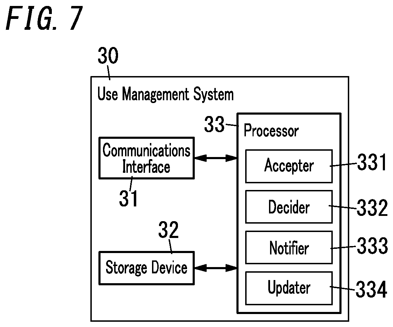

The use management system 30 includes a communications interface 31, a storage device 32, and a processor 33 as shown in FIG. 7. The use management system 30 may be implemented as, for example, a server.

The communications interface 31 is a communications interface. The communications interface 31 may be connected to the communications network 60 and has the capability of establishing communication over the communications network 60. The communications interface 31 is compliant with a predetermined communications protocol. The predetermined communications protocol may be selected from various known wired and wireless communication standards.

The storage device 32 may be used to store information to be used by the processor 33. For example, the use schedule may be stored in the storage device 32. In addition, not only the use schedule but also the electric energy consumptions expected with respect to the scheduled use periods included in the use schedule are stored in the storage device 32 as well. The storage device 32 includes one or more storage devices. The storage device may be, for example, a random-access memory (RAM) or an electrically erasable programmable read-only memory (EEPROM).

The processor 33 is a control circuit for controlling the operation of the use management system 30. The processor 33 may be implemented as a computer system including one or more processors (microprocessors) and one or more memories. That is to say, the functions of the processor 33 are performed by making the one or more processors execute one or more (computer) programs (applications) stored in the one or more memories. In this embodiment, the program is stored in advance in the memory of the processor 33. Alternatively, the program may also be downloaded via a telecommunications line such as the Internet or distributed after having been stored in a non-transitory storage medium such as a memory card.

The processor 33 includes an accepter 331, a decider 332, a notifier 333, and an updater 334, as shown in FIG. 7. Note that in FIG. 7, the accepter 331, the decider 332, the notifier 333, and the updater 334 do not represent substantive configurations but represent functions to be performed by the processor 33. The accepter 331, the decider 332, the notifier 333, and the updater 334 will be described later.

The charging management system 20 is a system for managing charging one or more electric cars 100. In this embodiment, the charging management system 20 uses the power supply system 40 to charge the plurality of electric cars 100. The electric cars 100 are supposed to be charged basically outside of their scheduled use periods. Thus, the charging management system 20 determines a charging schedule by reference to the use schedule generated by the use management system 30. Then, the charging management system 20 controls charging the electric cars 100 according to the charging schedule thus determined.

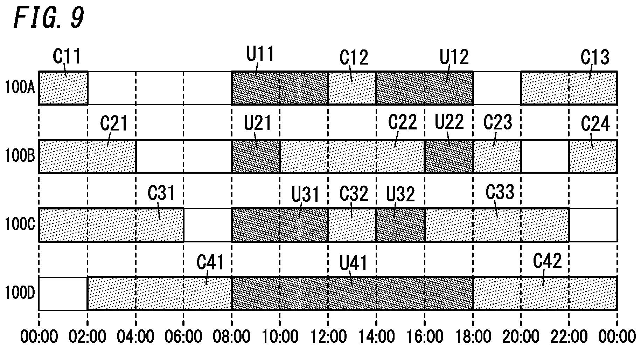

FIG. 9 shows an exemplary charging schedule determined by reference to the use schedule shown in FIG. 8. Note that the use schedule is also shown in FIG. 9. In FIG. 9, the charging schedule indicates scheduled charging periods of a plurality of (e.g., four in this embodiment) electric cars 100A-100D during a specified period. In FIG. 9, the specified period is one day. However, this is only an example and should not be construed as limiting. The specified period does not have to be one day but may also be, for example, one week, one month, or one year and may be set as appropriate according to the operating status of the management system 10. The scheduled charging period means a period for which the electric car 100 is scheduled to be charged. The scheduled charging periods are set not to overlap with the scheduled use periods during the specified period.

In FIG. 9, as for the electric car 100A, a scheduled charging period C11 is set as a period from 0:00 to 2:00, another scheduled charging period C12 is set as a period from 12:00 to 14:00, and still another scheduled charging period C13 is set as a period from 20:00 to 00:00. As for the electric car 100B, a scheduled charging period C21 is set as a period from 00:00 to 04:00, another scheduled charging period C22 is set as a period from 10:00 to 16:00, still another scheduled charging period C23 is set as a period from 18:00 to 20:00, and yet another scheduled charging period C24 is set as a period from 22:00 to 00:00. As for the electric car 100C, a scheduled charging period C31 is set as a period from 00:00 to 06:00, another scheduled charging period C32 is set as a period from 12:00 to 14:00, and still another scheduled charging period C33 is set as a period from 16:00 to 22:00. As for the electric car 100D, a scheduled charging period C41 is set as a period from 02:00 to 08:00 and another scheduled charging period C42 is set as a period from 18:00 to 00:00.

The charging management system 20 includes a communications interface 21, a storage device 22, and a processor 23 as shown in FIG. 3. The charging management system 20 may be implemented as, for example, a server.

The communications interface 21 is a communications interface. The communications interface 21 may be connected to the communications network 60 and has the capability of establishing communication over the communications network 60. The communications interface 21 is compliant with a predetermined communications protocol. The predetermined communications protocol may be selected from various known wired and wireless communication standards.

The storage device 22 may be used to store information to be used by the processor 23. For example, the charging schedule may be stored in the storage device 22. In addition, the use schedule acquired from the use management system 30 may also be stored in the storage device 22. The storage device 32 includes one or more storage devices. The storage device may be, for example, a random-access memory (RAM) or an electrically erasable programmable read-only memory (EEPROM).

The processor 23 is a control circuit for controlling the operation of the charging management system 20. The processor 23 may be implemented as a computer system including one or more processors (microprocessors) and one or more memories. That is to say, the functions of the processor 23 are performed by making the one or more processors execute one or more (computer) programs (applications) stored in the one or more memories. In this embodiment, the program is stored in advance in the memory of the processor 23. Alternatively, the program may also be downloaded via a telecommunications line such as the Internet or distributed after having been stored in a non-transitory storage medium such as a memory card.

The processor 23 includes the acquirer 231, a presenter 232, a determiner 233, a controller 234, a notifier 235, and a decider 236 as shown in FIG. 3. Note that in FIG. 3, the acquirer 231, the presenter 232, the determiner 233, the controller 234, the notifier 235, and the decider 236 do not represent substantive configurations but represent functions to be performed by the processor 23.

Next, the respective constituent elements of the charging management system 20, namely, the acquirer unit 231, the presenter 232, the determiner 233, the controller 234, the notifier 235, and the decider 236 and the respective constituent elements of the use management system 30, namely, the accepter 331, the decider 332, the notifier 333, and the updater 334will be described. As shown in FIG. 2, the charging management system 20 and the use management system 30 transmit and receive information to/from each other. Thus, in the following description, these constituent elements of the charging management system 20 and the use management system 30 will be described following the flow of operations performed by the charging management system 20 and the use management system 30 to give higher priority to making the following description easily understandable.

First, the respective constituent elements of the charging management system 20 and the use management system 30 will be described with reference to FIGS. 2-7 following the flow of operations performed when the user rents an electric car 100.

The accepter 331 of the use management system 30 accepts the user's demand for using (hereinafter referred to as "use demand") a moving vehicle 100, which has been transmitted from the terminal device 50 (in M11). The user's use demand for the electric car 100 includes at least a demand period in which use of the electric car 100 is demanded. As used herein, the demand period is period in which the user demands the use of the electric car 100. The user's use demand for the electric car 100 may also include the user's attribute information and the electric car's 100 attribute information. The user's attribute information may be information indicating whether the user belongs to a corporation. Also, the electric car's 100 attribute information may include at least one of the type, the intended use, the initial location, the destination, the distance to travel, the number of passengers to travel, or the mode of use.

The decider 332 of the use management system 30 determines whether there is any electric car 100 that meets the use demand accepted by the accepter 331 (i.e., the user's use demand for the electric car 100) (in S12). In this embodiment, the decider 332 selects an electric car 100 that meets the user's use demand from the plurality of electric cars 100. In selecting such an electric car 100 that meets the user's use demand from the plurality of electric cars 100, the decider 332 refers to the decision information acquired from the charging management system 20. To acquire the decision information from the charging management system 20, the decider 332 provides the charging management system 20 with demand information (in M12). The demand information includes information about the demand period in which use of the electric car 100 is demanded. In this embodiment, the demand information includes information about the electric energy required to use the electric car 100 for the demand period.

In this case, the user's use demand for the electric car 100 may include the user's attribute information and the electric vehicle's 100 attribute information. The electric vehicle's 100 attribute information may include at least one of the type, the intended use, the initial location, the destination, the distance to travel, the number of passengers to travel, or the mode of use. Examples of the type include the model of the electric car 100 and the classification of the electric car 100 (which may be an ordinary car or a small car). Examples of the intended use include trip, shopping, pickup and drop-off, and delivery. Examples of the initial location include the place where the electric car 100 is stationed at the beginning of the scheduled use period. The place may be a place where the electric car 100 is supposed to be charged. Examples of the destination include a place that the user is going to visit by using the electric car 100. For example, if the user uses the electric car 100 to go shopping, then the destination is the shop that he or she is going to visit. On the other hand, if the user uses the electric car 100 to go on a trip, then the destination is a sightseeing spot or accommodations that the user is going to visit. The distance to travel is the distance that the user plans to travel by the electric car 100. The distance to travel may be the distance to travel to make a roundtrip between the initial location and the destination. The number of passengers to travel is the number of passengers who plan to travel by the electric car 100. For example, the number of passengers to travel is the number of persons who are scheduled to get on the electric car 100. The mode of use is the mode of use of the electric car 100. In this embodiment, the mode of use is supposed to be a mode in which the electric car 100 is used by a company's employee (i.e., for business use) and a mode in which the electric car 100 is used by a person who is not a company's employee (for non-business use; such as car sharing or car renting).

The decider 332 may obtain the electric energy required based on the attribute information of the electric car 100. For example, if the attribute information of the electric car 100 includes the distance to travel, then the electric energy required may be estimated based on the distance to travel. Alternatively, the distance to travel may also be estimated based on the initial location and the destination. For example, the type of the electric car 100 and the number of passengers to travel may affect the electric mileage of the electric car 100. The electric mileage may affect the electric energy required. Therefore, the electric energy required may be changed according to the type of the moving vehicle (electric car 100). Alternatively, the electric energy required may also be changed according to the intended use of the moving vehicle (electric car 100). Examples of the intended use of the electric car 100 include trip and shopping. Going on a trip will require a longer distance to travel than going shopping. Thus, if the intended use is going on a trip, then the electric energy required is set at a larger value than in a situation where the intended use is going shopping. Optionally, the demand information may include the user's attribute information and the electric car's 100 attribute information, both of which are included in the user's use demand for the electric car 100. That is to say, the electric energy required does not have to be the electric energy required to allow the electric car 100 to operate (travel) for the demand period but may also be set with various conditions including the attribute information of the electric car 100 taken into account.

The acquirer 231 of the charging management system 20 acquires demand information, including information about the demand period in which use of an electric car 100 is demanded, from the use management system 30 that manages the use of a plurality of electric cars 100, each including the storage battery 110 for use as a power source (in M12). In this embodiment, the decider 332 of the use management system 30 transmits the demand information to the charging management system 20 and the acquirer 231 of the charging management system 20 receives the demand information over the communications network 60. In addition, the acquirer 231 acquires the use schedule for the electric cars 100 from the use management system 30. At this time, the acquirer 231 also acquires, from the use management system 30, information about the electric energy consumption expected for the scheduled use period included in the use schedule.

The presenter 232 of the charging management system 20 presents the decision information to the use management system 30 (in M13). The decision information is information for use to determine whether any electric car 100 is available in the demand period. The presenter 232 generates the decision information based on the amount of available electricity in the storage battery 110 in the demand period in which the use of the electric car 100 is demanded (in S11). In this embodiment, the decision information includes basic information. The basic information includes information indicating the amount of available electricity in the demand period in which the use of the electric car 100 is demanded (hereinafter referred to as a "first amount of available electricity"). Optionally, the decision information may include influence information as needed. As used herein, the "influence information" is information indicating how the use of the electric car 100 in one or more scheduled use periods is affected by reserving the amount of available electricity in the storage battery 110 (first amount of available electricity) for the demand period. In particular, the influence information includes information indicating the amount of available electricity in the storage battery 110 (second amount of available electricity) in one or more scheduled use periods when the amount of available electricity in the storage battery 110 (first amount of available electricity) is reserved for the demand period. In this manner, the presenter 232 may present decision information, including the basic information and the influence information, to the use management system 30.

The decider 332 of the use management system 30 determines, by reference to the decision information provided by the presenter 232 of the charging management system 20, whether there is any electric car 100 that meets the user's use demand for the electric car 100 (i.e., whether there is any electric car 100 available in the demand period) (in S12). The decider 332 selects an electric car 100, of which the amount of available electricity (first amount of available electricity) is equal to or greater than the electric energy required to use the electric car 100 for the demand period, as an optional moving vehicle (electric car) 100 that may be used in the demand period. Nevertheless, even if the first amount of available electricity is equal to or greater than the electric energy required but the second amount of available electricity is less than the electric energy consumption expected, then the electric car 100 should be regarded as non-usable in the demand period. Thus, the decider 332 excludes a moving vehicle (electric car) 100, of which the second amount of available electricity in a scheduled use period following the demand period is less than the electric energy consumption expected, from the list of moving vehicles (electric cars) 100 that may be used in the demand period.

Optionally, the decider 332 may also regard even a moving vehicle (electric car) 100, of which the second amount of available electricity in the scheduled use period following the demand period is less than the electric energy consumption expected, as an optional moving vehicle (electric car) 100 that may be used in the demand period with a collateral condition presented to the user. In this case, the collateral condition is that the user agrees to use a moving vehicle 100, of which the second amount of available electricity is less than the electric energy consumption expected. In other words, the collateral condition is that the user agrees to charge the moving vehicle 100 by him- or herself. In that case, the use management system 30 may offer a discount on the fee for using the moving vehicle 100 as an advantage on the condition that the user agrees to use a moving vehicle 100, of which the second amount of available electricity is less than the electric energy consumption expected.

In this manner, according to this embodiment, the decider 332 selects, based on the decision information, one or more moving vehicles (electric cars) 100 that may be used in the demand period, as electric car (s) 100 that meet the user's use demand for the electric cars 100.

The notifier 333 of the use management system 30 transmits notification information to notify the user of the one or more electric cars 100 that have been selected by the decider 332 as electric cars 100 that meet the user's use demand (i.e., electric cars 100 that may be used in the demand period) to the terminal device 50 (in M14). This allows the terminal device 50 to present the information about the one or more electric cars 100 selected by the decider 332 as optional electric cars 100 that meet the user's use demand to the user via the input/output interface 51. The user may choose, by operating the input/output interface 51, any desired electric car 100 from the one or more electric cars 100 presented on the input/output interface 51. Then, the terminal device 50 transmits information about the electric car 100 chosen by the user to the use management system 30 (in M15). If there is no electric car 100 that meets the user's use demand, then the user may be notified that there are no electric cars 100 that meet his or her use demand.

The updater 334 of the use management system 30 receives information about the electric car 100 chosen by the user from the terminal device 50 (in M15). The updater 334 notifies the terminal device 50 and the charging management system 20 that the scheduled use period is fixed with the electric car 100 chosen by the user (in M16, M17). The updater 334 changes the use schedule to set a period corresponding to the demand period as the scheduled use period with respect to the electric car 100 chosen by the user. In this manner, the updater 334 changes (updates) the use schedule according to the user's demand (in S13). In addition, the updater 334 also sets the electric energy required for the demand period as the electric energy consumption expected for the newly set scheduled use period.

On being notified by the updater 334 that the scheduled use period is fixed with the electric car 100 chosen by the user, the determiner 233 of the charging management system 20 determines (updates) the charging schedule since the use schedule has been changed by fixing the scheduled use period (in S14). That is to say, to reduce the chances of the remaining capacity of the storage battery 110 of the electric car 100 running short when needed now that a new scheduled use period has been added to the use schedule, the determiner 233 reorganizes (updates) the charging schedule. For example, the charging schedule may be changed to compensate for the decrease in the remaining capacity of the storage battery 110 at the end of the use schedule. In this manner, the determiner 233 changes (updates) the charging schedule in response to a change (update) of the use schedule.

The controller 234 of the charging management system 20 controls the power supply system 40 (in M18). More specifically, the controller 234 controls the power supply system 40 according to the updated charging schedule. That is to say, the controller 234 controls charging at least one of the respective storage batteries 110 of the plurality of electric cars 100 according to the updated charging schedule. Specifically, in each scheduled charging period of the charging schedule, the controller 234 has each electric car 100 charged with its associated charger 41. Thus, the power supply system 40 performs charging the electric car (s) 100 following the charging schedule (in S15).

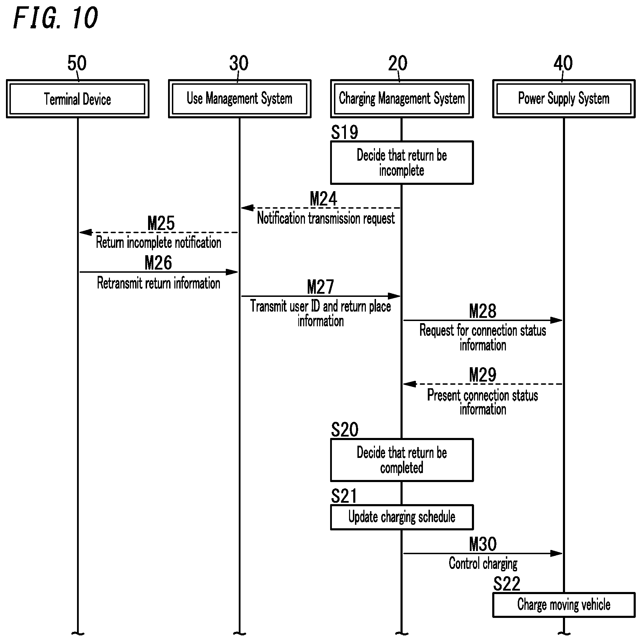

Next, the respective constituent elements of the charging management system 20 and the use management system 30 will be described with reference to FIGS. 2-4 and FIG. 10 following the flow of operations performed when the user returns an electric car 100 used.

The accepter 331 of the use management system 30 accepts, from the terminal device 50 and via the communications interface 31, a return notification informing that the moving vehicle 100 has been returned to the return place (in M19). Note that the return notification includes a user ID and return place information. The user ID is identification information to identify the user. The return place information is information to identify (i.e., determine) the place where the user has returned the electric car 100. Then, the accepter 331 transmits the return information thus accepted to the charging management system 20 via the communications interface 31 (in M20). In this embodiment, when returning the electric car 100 used, the user chooses one separate parking space (e.g., a separate parking space 416A) from vacant separate parking spaces 416 and parks (i.e., returns) the electric car 100 in the separate parking space 416A chosen. Each of the plurality of separate parking spaces 416 is provided with a piece of place information to identify (determine) the place. The user returns the electric car 100 used to the separate parking place 416A chosen with the separate parking space 416A chosen regarded as a return place (hereinafter also referred to as a "return place 416A") and with place information of the separate parking space 416A regarded as return place information. Then, the user connects the charging connector 411 of a charger 41A installed in the separate parking space 416A chosen to the socket 111 of the electric car 100 returned to the separate parking space 416A chosen. Thereafter, using the terminal device 50, the user transmits, as the return notification, return information including his or her own user ID and return place information about the return place 416A chosen, to the use management system 30. Then, the accepter 331 of the use management system 30 accepts the return information from the terminal device 50 via the communications interface 31.

The acquirer 231 of the charging management system 20 acquires the return information (i.e., the user ID and the return place information) from the use management system 30 via the communications interface 21 (in M20). On acquiring the return information from the use management system 30, the acquirer 231 sends a request for the connection status information of the charger 41A installed in the return place 416A, identified by the return place information included in the return information, to the power supply system 40 via the communications interface 21 (in M21). Note that the request for the connection status information includes the return place information included in the return information.

The management device 45 of the power supply system 40 acquires the request for connection status information from the charging management system 20 via the gateway 44 (in M21). Then, the management device 45 acquires the connection status information from the charger 41A installed in the return place 416A, identified by the return place information included in the request for connection status information acquired, and transmits the connection status information thus acquired to the charging management system 20 via the gateway 44 (in M22).

The acquirer 231 of the charging management system 20 acquires the connection status information from the power supply system 40 via the communications interface 21 (in M22). Then, the decider 236 of the charging management system 20 determines, based on the connection status information acquired by the acquirer 231, whether the return of the electric car 100 from the user is completed. That is to say, if the connection status information indicates that the charging connector 411 of the charger 41Ais connected to the socket 111 of the electric car 100, the decider 236 decides that the return of the electric car 100 from the user be completed (i.e., return completed) (in S16). On the other hand, if the connection status information indicates that the charging connector 411 of the charger 41A has not been connected to the socket 111 of the electric car 100 yet, then the decider 236 decides that the return of the electric car 100 from the user be incomplete (i.e., return incomplete) (in S19).

If the decider 236 decides that the return be completed (in S16), the determiner 233 of the charging management system 20 updates the charging schedule upon the completion of the return (in S17). That is to say, to charge the storage battery 110 of the electric car 100 that has been returned, the determiner 233 reorganizes (i.e., updates) the charging schedule. In this manner, the determiner 233 changes (updates) the charging schedule to charge the electric car 100 that has been returned. Then, the controller 234 of the charging management system 20 controls the power supply system 40 following the charging schedule updated (in M23). Thus, the power supply system 40 charges the electric car 100 following the charging schedule updated (in S18).

If the decider 236 decides that the return be incomplete (in S19), then the notifier 235 of the charging management system 20 performs processing to transmit a return incomplete notification to the terminal device 50 (i.e., the terminal device of the user who has returned the electric car 100 to the return place 416A) (in M24). More specifically, the notifier 235 sends a request for transmitting a return incomplete notification to the terminal device 50 (notification transmission request) to the use management system 30. As used herein, the "return incomplete notification" refers to a notification informing that the charging connector 411 of the charger 41A at the return place 416A is not connected to the socket 111 of the electric car 100.

On receiving the notification transmission request from the charging management system 20 via the communications interface 31 (in M24), the notifier 333 of the use management system 30 transmits the return incomplete notification to the terminal device 50 via the communications interface 31 (in M25).

When the communications interface 52 receives the return incomplete notification from the use management system 30 (in M25), the terminal device 50 informs the user of the contents of the return incomplete notification (that the charging connector 411 of the charger 41A at the return place 416A is not connected to the socket 111 of the electric car 100) via the input/output interface 51. This enables prompting the user to connect the charging connector 411 of the charger 41A to the socket 111 of the electric car 100 that he or she has returned to the return place 416A.

On checking the contents of the return incomplete notification on the terminal device 50, the user connects the charging connector 411 of the charger 41A to the socket 111 of the electric car 100 that he or she has returned to the return place 416A. Then, the user retransmits, using the terminal device 50, the return information to the use management system 30 (in M26). In response, the use management system 30, the charging management system 20, and the power supply system 40 perform the processing steps (M26-M29) following the same flow as the processing steps (M19-M22) described above. As a result, the decider 236 of the charging management system 20 decides, this time, that the return be completed (in S20). Then, as in the flow of the above-described processing (S18, M23, S18), the determiner 233 of the charging management system 20 updates the charging schedule so that the charging schedule includes charging the electric car 100 returned (in S21). Thereafter, the controller 234 of the charging management system 20 controls the power supply system 40 following the charging schedule thus updated (in M30). Thus, the power supply system 40 charges the plurality of electric cars 100 as per the charging schedule thus updated (in S22).

### (1-3) Recapitulation

As can be seen from the foregoing description, the charging management system 20 includes the acquirer 231 and the decider 236. The acquirer 231 acquires connection status information indicating whether the charging connector 411 of a charger 41 is connected to the socket 111 of an electric car (electric vehicle) 100. The decider 236 determines, depending on whether the connection status information acquired by the acquirer 231 indicates that the charging connector 411 is connected to the socket 111, whether return of the electric car 100 from a user is completed. Such a charging management system 20 may make management by determining whether the charging connector 411 of the charger 41 is connected to the socket 111 of the electric car 100 returned by the user.

### (1-4) Non-system implementations

The concept of the present disclosure may also be implemented as a charging management method, not just the charging management system 20. The charging management method includes an acquisition step and a decision step. The acquisition step includes acquiring connection status information indicating whether the charging connector 411 of a charger 41 is connected to the socket 111 of an electric car (electric vehicle) 100. The decision step includes determining, depending on whether the connection status information acquired by the acquirer 231 indicates that the charging connector 411 is connected to the socket 111, whether return of the electric car 100 from a user is completed. This charging management method enables making management by determining whether the charging connector 411 of the charger 41 is connected to the socket 111 of the electric car 100 returned by the user.

The charging management system 20 may also be implemented using a computer system. That is to say, the method (charging management method) performed by the charging management system 20 may also be carried out by making a computer system execute a program. The program is a computer program designed to cause one or more processors to perform the charging management method. Such a program, as well as the charging management system, enables making management by determining whether the charging connector 411 of the charger 41 is connected to the socket 111 of the electric car 100 returned by the user.

Optionally, the charging management system 20 may also be implemented as, for example, a non-transitory storage medium on which a computer program is stored.

### (2) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. Next, variations of the exemplary embodiment will be enumerated one after another. Note that the variations to be described below may be adopted in combination as appropriate.

### (2-1) First variation

In the exemplary embodiment described above, if the decider 236 of the charging management system 20 decides that the return be incomplete, the notifier 235 of the charging management system 20 performs processing to transmit a return incomplete notification to the terminal device 50 owned by the user (i.e., the user who has returned the electric car 100 to the return place 416A). As used herein, the "return incomplete" refers to a state where the charging connector 411 of the charger 41A at the return place 416A has not been connected yet to the socket 111 of the electric car 100 returned to the return place 416A, thus making the return of the electric car 100 incomplete.

Alternatively, if the decider 236 of the charging management system 20 decides that the return be incomplete, the notifier 235 of the charging management system 20 may also perform processing to transmit a connection request notification to the terminal device 50 owned by a person who shares the electric car 100 with, and is different from, the user. As used herein, the "connection request notification" refers to a notification requesting that the charging connector 411 of the charger 41A at the return place 416A be connected to the socket 111 of the electric car 100 returned to the return place 416A. That is to say, if the return of the electric car 100 is incomplete, another person may be requested to connect the charging connector 411 to the electric car 100 instead of the user by transmitting the connection request notification to the person's terminal device 50 instead of the user's terminal device 50.

More specifically, the notifier 235 of the charging management system 20 sends a request for transmitting the connection request notification to the notifier 333 of the use management system 30 and the notifier 333 transmits, in response to the request, the connection request notification to the person's terminal device 50. Note that the storage device 32 of the use management system 30 manages the communications addresses of the respective terminal devices 50 of all sharers and the notifier 333 transmits, based on the communications address stored in the storage device 32, the connection request notification to the person's terminal device 50.

Alternatively, the notifier 235 of the charging management system 20 may transmit the connection request notification to the person's terminal device 50 directly not via he use management system 30. In that case, the storage device 22 of the charging management system 20 manages the communications addresses of the respective terminal devices 50 of all sharers and the notifier 235 transmits, based on the communications address stored in the storage device 22, the connection request notification to the person's terminal device 50.

### (2-2) Second variation

In the exemplary embodiment described above, if the decider 236 decides that the return be incomplete, the notifier 235 of the charging management system 20 transmits the notification transmission request to the use management system 30 (in M24). Then, on receiving the notification transmission request, the notifier 333 of the use management system 30 transmits a return completion notification to the terminal device 50 of the user's (in M25). Alternatively, the notifier 235 of the charging management system 20 may transmit the return completion notification to the terminal device 50 of the user's not via the use management system 30.

### (2-3) Third variation

In the exemplary embodiment described above, the acquirer 231 of the charging management system 20 transmits a request for the connection status information to the management device 45 of the power supply system 40 (in M28). In response to the request, the management device 45 acquires the connection status information from the charger 41 and transmits the connection status information thus acquired to the acquirer 231 (in M29). Alternatively, the acquirer 231 may transmit the request for the connection status information to the charger 41 not via the management device 45 and the charger 41 may transmit the connection status information to the acquirer 231 in response to the request.

### (2-4) Fourth variation

In the exemplary embodiment described above, the controller 234 of the charging management system 20 controls the plurality of chargers 41 via the management device 45 of the power supply system 40. Alternatively, the controller 234 may control the plurality of chargers 41 directly, not via the management device 45.

### (3) Aspects

As can be seen from the foregoing description, the exemplary embodiment and its variations described above are specific implementations of the following aspects of the present disclosure.

A charging management system (20) according to a first aspect includes an acquirer (231) and a decider (236). The acquirer (231) acquires connection status information indicating whether a charging connector (411) of a charger (41) is connected to a socket (111) of an electric vehicle (100). The decider (236) determines, depending on whether the connection status information acquired by the acquirer (231) indicates that the charging connector (411) is connected to the socket (111), whether return of the electric vehicle (100) from a user is completed.

This configuration enables making management by determining whether the charging connector (411) of a charger (41) is connected to the socket (111) of an electric vehicle (100) returned by the user. This allows the electric vehicle (100) to be charged appropriately.

In a charging management system (20) according to a second aspect, which may be implemented in conjunction with the first aspect, the acquirer (231) acquires return information indicating that the user has returned the electric vehicle (100). When the acquirer (231) acquires the return information, the decider (236) determines, based on the connection status information acquired by the acquirer (231), whether the return of the electric vehicle (100) from the user is completed.

This configuration enables determining, at the timing when the user has just returned the electric vehicle (100), whether the return of the electric vehicle (100) from the user is completed.

A charging management system (20) according to a third aspect, which may be implemented in conjunction with the first or second aspect, includes a notifier (235). When the decider (236) decides that the return of the electric vehicle (100) from the user be incomplete, the notifier (235) performs processing to transmit a return incomplete notification to a terminal device (50) owned by the user. The return incomplete notification informs that the charging connector (411) is not connected to the socket (111).

This configuration enables notifying the user, who has returned the electric vehicle (100), that the charging connector (411) of the charger (41) is not connected to the socket (111) of the electric vehicle (100).

In a charging management system (20) according to a fourth aspect, which may be implemented in conjunction with the third aspect, the notifier (235) performs, when the decider (236) decides that the return of the electric vehicle (100) from the user be incomplete, processing to transmit a connection request notification to a terminal device (50) owned by a person who is sharing the electric vehicle (100) with, and is different from, the user. The connection request notification requests that the charging connector (411) be connected to the socket (111).

This configuration enables requesting, when the charging connector (411) of the charger (41) is not connected to the socket (111) of the electric vehicle (100), a person who is sharing the electric vehicle (100) with, and is different from, the user that has returned the electric vehicle (100) to connect the charging connector (411) to the electric vehicle (100).

A charging management system (20) according to a fifth aspect, which may be implemented in conjunction with any one of the first to fourth aspects, includes a controller (234). When the decider (236) decides that the return of the electric vehicle (100) from the user be completed, the controller (234) controls the charger (41) to make the charger (41) charge the electric vehicle (100) following a charging schedule.

According to this configuration, it is not until a decision has been made that the return of the electric vehicle (100) be completed (i.e., the charging connector (411) be connected to the electric vehicle (100)) that the electric vehicle (100) starts being charged. This prevents the user from failing to charge the electric vehicle (100) by forgetting to connect the charging connector (411) to the electric vehicle (100).

A charging system according to a sixth aspect includes the charging management system (20) according to any one of the first to fifth aspects and the charger (41).

This configuration enables providing a charging system including the charging management system (20) and the charger (41).

A charging management method according to a seventh aspect includes an acquisition step and a decision step. The acquisition step includes acquiring connection status information indicating whether a charging connector (411) of a charger (41) is connected to a socket (111) of an electric vehicle (100). The decision step includes determining, depending on whether the connection status information acquired in the acquisition step indicates that the charging connector

(411) is connected to the socket (111), whether return of the electric vehicle (100) from a user is completed.

This method enables managing the connection status indicating whether a charger (41) is connected to an electric vehicle (100) returned by the user. This allows the electric vehicle (100) to be charged efficiently.

A program according to an eighth aspect is designed to cause one or more processors to perform the charging management method according to the seventh aspect.

This enables providing a program designed to cause one or more processors to perform the charging management method described above.

### Reference Signs List

- 20: Charging Management System
- 41: Charger
- 50: Terminal Device
- 100: Electric Car (Electric Vehicle)
- 111: Socket
- 231: Acquirer
- 234: Controller
- 236: Decider
- 411: Charging Outlet

## Claims

1. A charging management system (20) comprising:
an acquirer (231) configured to acquire connection status information indicating whether a charging connector (411) of a charger (41) is connected to a socket (111) of an electric vehicle (100); and
a decider (236) configured to determine, depending on whether the connection status information acquired by the acquirer (231) indicates that the charging connector (411) is connected to the socket (111), whether return of the electric vehicle (100) from a user is completed;
wherein the charging management system (20) is **characterized by** further comprising
a notifier (235) configured to, when the decider (236) decides that the return of the electric vehicle (100) from the user be incomplete, perform processing to transmit a return incomplete notification, informing that the charging connector (411) is not connected to the socket (111), to a terminal device (50) owned by the user.

2. The charging management system (20) of claim 1, wherein
the acquirer (231) is configured to acquire return information indicating that the user has returned the electric vehicle (100), and
the decider (236) is configured to, when the acquirer (231) acquires the return information, determine, based on the connection status information acquired by the acquirer (231), whether the return of the electric vehicle (100) from the user is completed.

3. The charging management system (20) of claim 1 or 2, wherein
the notifier (235) is configured to, when the decider (236) decides that the return of the electric vehicle (100) from the user be incomplete, perform processing to transmit a connection request notification, requesting that the charging connector (411) be connected to the socket (111), to a terminal device (50) owned by a person who is sharing the electric vehicle (100) with, and is different from, the user.

4. The charging management system (20) of any one of claims 1 to 3, comprising a controller (234) configured to, when the decider(236) decides that the return of the electric vehicle (100) from the user be completed, control the charger (41) to make the charger(41) charge the electric vehicle (100) following a charging schedule.

5. A charging system comprising:
the charging management system (20) of any one of claims 1 to 4; and
the charger (41).

6. A charging management method comprising:
an acquisition step including acquiring connection status information indicating whether a charging connector (411) of a charger (41) is connected to a socket (111) of an electric vehicle (100); and
a decision step including determining, depending on whether the connection status information acquired in the acquisition step indicates that the charging connector (411) is connected to the socket (111), whether return of the electric vehicle (100) from a user is completed;
wherein the charging management method is **characterized by** further comprising
a notification step including, when the decision step decides that the return of the electric vehicle (100) from the user be incomplete, perform processing to transmit a return incomplete notification, informing that the charging connector (411) is not connected to the socket (111), to a terminal device (50) owned by the user.

7. A program designed to cause one or more processors to perform the charging management method of claim 6.

## Patentansprüche

1. Ladeverwaltungssystem (20), umfassend:
einen Erfasser (231), der dafür ausgelegt ist, um Verbindungsstatusinformationen zu erfassen, die angeben, ob ein Ladestecker (411) einer Ladevorrichtung (41) mit einer Buchse (111) eines Elektrofahrzeugs (100) verbunden ist; und
einen Entscheider (236), der dafür ausgelegt ist, um in Abhängigkeit davon, ob die von dem Erfasser (231) erfassten Verbindungsstatusinformationen angeben, dass der Ladestecker (411) mit der Buchse (111) verbunden ist, zu bestimmen, ob eine Rückgabe des Elektrofahrzeugs (100) durch einen Benutzer vollständig ist;
wobei das Ladeverwaltungssystem (20) **dadurch gekennzeichnet ist, dass** es ferner umfasst:
einen Benachrichtiger (235), der dafür ausgelegt ist, um, wenn der Entscheider (236) bestimmt, dass die Rückgabe des Elektrofahrzeugs (100) durch den Benutzer unvollständig ist, eine Verarbeitung durchzuführen, um eine Rückgabe-unvollständig-Benachrichtigung, die darüber informiert, dass der Ladestecker (411) nicht mit der Buchse (111) verbunden ist, an ein Endgerät (50) zu senden, das dem Benutzer gehört.

2. Ladeverwaltungssystem (20) nach Anspruch 1, wobei
der Erfasser (231) dafür ausgelegt ist, um Rückgabeinformationen zu erfassen, die angeben, dass der Benutzer das Elektrofahrzeug (100) zurückgegeben hat, und
der Entscheider (236) dafür ausgelegt ist, um, wenn der Erfasser (231) die Rückgabeinformationen erfasst, auf der Grundlage der von dem Erfasser (231) erfassten Verbindungsstatusinformationen zu bestimmen, ob die Rückgabe des Elektrofahrzeugs (100) durch den Benutzer vollständig ist.

3. Ladeverwaltungssystem (20) nach Anspruch 1 oder 2, wobei der Benachrichtiger (235) dafür ausgelegt ist, um, wenn der Entscheider (236) bestimmt, dass die Rückgabe des Elektrofahrzeugs (100) durch den Benutzer unvollständig ist, eine Verarbeitung durchzuführen, um eine Verbindungsanforderungsbenachrichtigung, in der aufgefordert wird, dass der Ladestecker (411) mit der Buchse (111) zu verbinden ist, an ein Endgerät (50) zu senden, das einer Person gehört, die das Elektrofahrzeug (100) mit dem Benutzer teilt und sich von diesem unterscheidet.

4. Ladeverwaltungssystem (20) nach einem der Ansprüche 1 bis 3, eine Steuervorrichtung (234) umfassend, die dafür ausgelegt ist, um, wenn der Entscheider (236) bestimmt, dass die Rückgabe des Elektrofahrzeugs (100) durch den Benutzer vollständig ist, die Ladevorrichtung (41) so zu steuern, dass die Ladevorrichtung (41) das Elektrofahrzeug (100) gemäß einem Ladeplan lädt.

5. Ladesystem, umfassend:
das Ladeverwaltungssystem (20) nach einem der Ansprüche 1 bis 4; und
die Ladevorrichtung (41).

6. Ladeverwaltungsverfahren, umfassend:
einen Erfassungsschritt, der ein Erfassen von Verbindungsstatusinformationen umfasst, die angeben, ob ein Ladestecker (411) einer Ladevorrichtung (41) mit einer Buchse (111) eines Elektrofahrzeugs (100) verbunden ist; und
einen Entscheidungsschritt, der ein Bestimmen umfasst, ob in Abhängigkeit davon, ob die Verbindungsstatusinformationen, die in dem Erfassungsschritt erfasst sind, angeben, dass der Ladestecker (411) mit der Buchse (111) verbunden ist, eine Rückgabe des Elektrofahrzeugs (100) durch einen Benutzer vollständig ist;
wobei das Ladeverwaltungsverfahren **dadurch gekennzeichnet ist, dass** es ferner umfasst:
einen Benachrichtigungsschritt, der umfasst, dass, wenn in dem Entscheidungsschritt bestimmt wird, dass die Rückgabe des Elektrofahrzeugs (100) durch den Benutzer unvollständig ist, eine Verarbeitung durchgeführt wird, um eine Rückgabe-unvollständig-Benachrichtigung, die darüber informiert, dass der Ladestecker (411) nicht mit der Buchse (111) verbunden ist, an ein Endgerät (50) zu senden, das dem Benutzer gehört.

7. Programm, das dafür ausgelegt ist, einen oder mehrere Prozessoren zu veranlassen, das Ladeverwaltungsverfahren nach Anspruch 6 durchzuführen.

## Revendications

1. Système de gestion de charge (20) comprenant :
un dispositif d'acquisition (231) qui est configuré pour acquérir une information d'état de connexion indiquant si un connecteur de charge (411) d'un chargeur (41) est connecté à une prise (111) d'un véhicule électrique (100) ; et
un dispositif de décision (236) qui est configuré pour déterminer, selon que l'information d'état de connexion acquise par le dispositif d'acquisition (231) indique que le connecteur de charge (411) est connecté à la prise (111), si la restitution du véhicule électrique (100) par un utilisateur est terminée ;
dans lequel système de gestion de charge (20) est **caractérisé en ce qu'**il comprend en outre
un dispositif de notification (235) qui est configuré pour, lorsque le dispositif de décision (236) décide que la restitution du véhicule électrique (100) par l'utilisateur est incomplète, effectuer un traitement pour transmettre une notification de restitution incomplète, informant que le connecteur de charge (411) n'est pas connecté à la prise (111), à un dispositif terminal (50) appartenant à l'utilisateur.

2. Système de gestion de charge (20) selon la revendication 1, dans lequel
le dispositif d'acquisition (231) est configuré pour acquérir une information de restitution indiquant que l'utilisateur a restitué le véhicule électrique (100), et
le dispositif de décision (236) est configuré pour, lorsque le dispositif d'acquisition (231) acquiert l'information de restitution, déterminer, sur la base de l'information d'état de connexion acquise par le dispositif d'acquisition (231), si la restitution du véhicule électrique (100) par l'utilisateur est terminée.

3. Système de gestion de charge (20) selon l'une quelconque des revendications 1 ou 2, dans lequel
le dispositif de notification (235) est configuré pour, lorsque le dispositif de décision (236) décide que la restitution du véhicule électrique (100) par l'utilisateur est incomplète, effectuer un traitement pour transmettre une notification de demande de connexion, demandant que le connecteur de charge (411) soit connecté à la prise (111), à un dispositif terminal (50) appartenant à une personne qui partage le véhicule électrique (100) avec l'utilisateur et qui est différente de l'utilisateur.

4. Système de gestion de charge (20) selon l'une quelconque des revendications 1 à 3, comprenant un dispositif de commande (234) qui est configuré pour, lorsque le dispositif de décision (236) décide que la restitution du véhicule électrique (100) par l'utilisateur est terminée, commander le chargeur (41) pour que le chargeur (41) charge le véhicule électrique (100) selon un programme de charge véhicule électrique (100) selon un programme de charge.

5. Système de charge comprenant :
le système de gestion de charge (20) selon l'une quelconque des revendications 1 à 4 ; et
le chargeur (41).

6. Procédé de gestion de charge comprenant :
une étape d'acquisition comprenant l'acquisition d'une information d'état de connexion indiquant si un connecteur de charge (411) d'un chargeur (41) est connecté à une prise (111) d'un véhicule électrique (100) ; et
une étape de décision comprenant la détermination, selon que l'information d'état de connexion acquise lors de l'étape d'acquisition indique que le connecteur de charge (411) est connecté à la prise (111), si la restitution du véhicule électrique (100) par un utilisateur est terminée
dans lequel procédé de gestion de charge est **caractérisé en ce qu'**il comprend en outre
une étape de notification comprenant, lorsque l'étape de décision décide que la restitution du véhicule électrique (100) par l'utilisateur est incomplète, effectuer un traitement pour transmettre une notification de restitution incomplète, informant que le connecteur de charge (411) n'est pas connecté à la prise (111), à un dispositif terminal (50) appartenant à l'utilisateur.

7. Programme conçu pour amener un ou plusieurs processeurs à exécuter le procédé de gestion de charge selon la revendication 6.
